Europäisches Patentamt

European Patent Office

Office européen des brevets

(19)

(11) Veröffentlichungsnummer: **0 250 775**
**A2**

(12) # EUROPÄISCHE PATENTANMELDUNG

(21) Anmeldenummer: 87106416.8

(51) Int. Cl.⁴: **G05B 19/18**

(22) Anmeldetag: 04.05.87

(30) Priorität: 06.05.86 DE 3615365

(43) Veröffentlichungstag der Anmeldung:
07.01.88 Patentblatt 88/01

(84) Benannte Vertragsstaaten:
DE FR GB IT SE

(71) Anmelder: Liebherr-Verzahntechnik GmbH
Postfach 1960
D-8960 Kempten(DE)

(72) Erfinder: Schuon, Joachim
Eschacherstrasse 43
D-8961 Buchenburg(DE)
Erfinder: Vogler, Flori
Dr. Schmidtchen Weg 2
D-8944 Grönenbach(DE)

(74) Vertreter: Klunker . Schmitt-Nilson . Hirsch
Winzererstrasse 106
D-8000 München 40(DE)

(54) Verfahren zur Bearbeitung der Zahnflanken eines Zahnrades.

(57) Es wird ein Verfahren zur Bearbeitung der Zahnflanken eines Zahnrades (Wälzschleifen) aufgezeigt. Das Zahnrad wird hierbei ohne Anhalten des Bearbeitungstisches auf diesem festgespannt. Die Position des Werkstückes zum Tisch wird mittels eines Sensors (berührungslos) ermittelt und mit einer zu Beginn der Bearbeitung einer Serie durchgeführten Kontrollmessung verglichen. Entsprechend dem Vergleichswert wird die Wälzkopplung beim aktuellen Bearbeitungsvorgang eingestellt.

Fig. 1

EP 0 250 775 A2

Die vorliegende Erfindung betrifft ein Verfahren zur Bearbeitung der Zahnflanken eines Zahnrades nach dem Oberbegriff des Patentanspruches 1, sowie eine Vorrichtung zur Durchführung des Verfahrens.

Entsprechend den hohen Qualitätsanforderungen an Zahnräder ist es heute üblich, die Zahnflanken nachzuarbeiten, z. B. zu - schleifen. Hierfür werden insbesondere numerisch gesteuerte Automaten (NC-Maschinen) verwendet.

Die Taktraten werden hierbei zum einen durch die Zeit festgelegt, welche für den eigentlichen Bearbeitungsvorgang benötigt wird (Hauptzeiten), zum anderen durch die Zeiten, die dafür benötigt werden um das Zahnrad auf den Bearbeitungstisch aufzubringen, dort festzusetzen, in die korrekte Position zum Bearbeitungswerkzeug hinsichtlich seiner Winkellage zu drehen und schließlich das Zahnrad wieder vom Bearbeitungstisch abzunehmen (Nebenzeit).

Ein wesentliches Problem stellt hierbei das Justieren des zu bearbeitenden Zahnrades relativ zum Werkzeug dar. Man geht heute z. B. so vor, daß man das Zahnrad auf dem Bearbeitungstisch (noch drehbar) ablegt und eine Zahnstange mit einer dem Zahnrad entsprechenden Teilung bis zu einer bestimmten Position (Anschlag) verschiebt und dabei mit dem Zahnrad kämmen läßt. Auf diese Weise nimmt dann bei bekannter Position des Bearbeitungstisches das Zahnrad eine definierte Winkelposition zum Bearbeitungstisch ein. Nach dieser Justierung spannt man das Zahnrad fest und beginnt mit dem eigentlichen Bearbeitungsvorgang, bei welchem das Werkzeug in Wälzkopplung mit dem Bearbeitungstisch über die Zahnflanken geführt wird. Auch bei allen anderen bekannten Verfahren wird das zu bearbeitende Zahnrad vor dem eigentlichen Bearbeitungsvorgang zunächst in eine definierte Winkelposition zum Bearbeitungstisch gebracht.

Diese bekannten Verfahren waren bislang durchaus zufriedenstellend, da die obenerwähnten Hauptzeiten relativ lang waren. Mit den heute zur Verfügung stehenden Mitteln konnten aber die Hauptzeiten wesentlich gesenkt werden, so daß man heute für die Bearbeitung einer Zahnflanke weit weniger als eine Sekunde benötigt, sich also Hauptzeiten abhängig von der Anzahl der Zähne eines zu bearbeitenden Zahnrades ergeben, die nur noch Bruchteile von Minuten betragen. Die Nebenzeiten, die alleine durch die Justierung der Zahnräder vor Beginn des Bearbeitungsvorganges notwendig sind, sind demgegenüber so groß geworden, daß sich der zur Erreichung kurzer Hauptzeiten getriebene Aufwand eigentlich nicht mehr lohnt.

Ausgehend vom obengenannten Stand der Technik ist es Aufgabe der vorliegenden Erfindung ein Verfahren der eingangs genannten Art dahingehend weiterzubilden, daß bei gleichbleibender Präzision der Fertigung die Nebenzeiten wesentlich reduziert werden, sowie eine Vorrichtung zur Durchführung dieses Verfahrens aufzuzeigen.

Diese Aufgabe wird durch die folgenden Schritte gelöst:
Man spannt ein erstes Zahnrad einer Serie in beliebiger Winkellage auf den Werkstücktisch und justiert die Verzahnung des Bearbeitungswerkzeugs durch Schließen der Wälzkopplung bezüglich der Zahnflanken des Zahnrades (Festlegung des Wälzkopplungswinkels;
Man versetzt den Werkstücktisch in Drehung;
Man bestimmt in einer Kalibriermessung die Phasenlage von Signalen (Zahnsignal), die beim Vorbeistreichen der Zähne des Zahnrades an einem in definierter Lage angeordneten Sensor generiert werden, bezüglich der Winkellage des Werkstücktisches;
Man bestimmt zum Bearbeiten aller weiterer Zahnräder der Serie nach dem Festspannen eines jeden Zahnrades auf dem Werkstücktisch in beliebiger Winkellage die Phasenlage des Zahnsignals;
Man vergleicht die Phasenlage der Zahnsignale mit der im Kalibrierschritt c ermittelten Phasenlage;
Man verstellt den Kopplungswinkel zwischen Werkzeug und Werkstücktisch um den sich ergebenden Differenzbetrag.

Bei diesem Verfahren wird sozusagen "fliegend" synchronisiert, wobei eine aktive Verdrehung des auf den Bearbeitungstisch aufgelegten Zahnrades zum Bearbeitungstisch nicht mehr stattfindet. Somit wird ein hinsichtlich der Nebenzeiten wesentlicher, bisher notwendiger Schritt vermieden. Darüberhinaus wird nicht, wie früher üblich, eine einzige Messung der Winkelposition des zu bearbeitenden Zahnrades vorgenommen, sondern man kommt vorteilhafterweise über die Phasenlagemessung des periodischen Mess-Signals zu einer Mittelwertsbildung, wodurch Meßfehler eliminiert werden und die Präzision der Fertigung steigt.

Eine weitere erhebliche Verkürzung der Nebenzeiten läßt sich dadurch erreichen, daß man beim Auflegen, Abnehmen und Bearbeiten der Zahnräder den Bearbeitungstisch mit im wesentlichen gleichbleibender Drehzahl drehen läßt. Hier-ei kann man die Zahnräder schon während des Zuführens in eine mit dem Drehtisch synchronisierte Drehung versetzten, oder aber durch Reibschluß mit dem Bearbeitungstisch beim Aufsetzen bis zur Drehgeschwindigkeit des Tisches beschleunigen. Die Zeitersparnis ist hierbei insbesondere deshalb so groß, weil der im allgemeinen sehr schwere Tisch nicht mehr zum Wechseln des Werkstückes angehalten und wieder zur Bearbeitung beschleunigt werden muß. Nachdem die Bearbeitungswerkzeuge heute eine Tischdrehzahl von bis zu 600 Umdrehungen pro Minute zulassen, ist leicht vorstellbar, daß die Beschleunigungszeiten einen wesentlichen Anteil an den Nebenzeiten haben. Hierbei ist darauf hinzuweisen, daß es mit den bisher bekannten Mitteln nicht möglich war, den Bearbeitungstisch mit konstanter Geschwindigkeit auch beim Wechsel des Werkstückes und dem Einstellen der Winkelposition zu be treiben. Erst mit dem erfindungsgemäßen Verfahren gelang dies. Bei Hauptzeiten von fünf Sekunden (pro Zahnrad) lassen sich bei Anwendung des erfindungsgemäßen Verfahrens Nebenzeiten von unter zehn Sekunden erzielen.

Zur Durchführung des erfindungsgemäßen Verfahrens eignet sich eine Vorrichtung, die folgende Merkmale aufweist:

- einen drehbaren Werkstücktisch mit Antriebsmotor;
- einen mit dem Werkstücktisch gekoppelten Drehwinkelsensor, der ein der Winkelposition des Werkstücktisches entsprechendes Ausgangssignal liefert;
- ein verzahntes, drehantreibbares Verzahnungswerkzeug, das mit einem Drehwinkelsensor gekoppelt ist, der ein der Winkelposition des Werkzeugs entsprechendes Ausgangssignal liefert;
- eine elektronische Wälzkopplung zwischen Werkstücktisch und Verzahnungswerkzeug, weiterhin mit
- einem Sensor, der in der Nähe der Zähne des Zahnrads angeordnet ist, und mindestens zwei unterschiedliche Signale entsprechend einer Zahnlücke oder einer Zahnflanke liefert;
- eine Signalverarbeitungs-und Steuerschaltung, die mit den Sensoren und dem Werkzeug verbunden ist, wobei die Signalverarbeitungs-und Steuerschaltung
- Komparatormittel aufweist, um die Phasenlage zwischen den Ausgangssignalen der beiden Sensoren bei drehendem Werkstücktisch zu bestimmen,
- Speichermittel aufweist, um in einem Kalibrierschritt die ermittelte Phasenlage zu speichern, und
- eine in Hard-oder Software realisierte Rechenschaltung aufweist, um die nach dem Aufspannen eines Zahnrades auf den Werkstücktisch bestimmte Phasenlage zwischen den Ausgangssignalen der Sensoren mit der gespeicherten Phasenlage zu vergleichen, den Differenzwert zu bestimmen und die Arbeitswinkelpositionen entsprechend dem Differenzbetrag derart zu verändern, daß die Phasendifferenz zwischen Arbeitswinkelposition und Ausgangssignal des ersten Sensors mit derjenigen im Kalibrierschritt übereinstimmt.

Diese Vorrichtung kann also ganz allgemein als NC-Maschine bezeichnet werden, da eine Signalverarbeitungs-und Steuerschaltung vorgesehen ist, die das Werkzeug bzw. den Wälzkopplungswinkel entsprechend den Sensorsignalen steuert. Als Werkzeug kommt hier in erster Linie ein schraub-bzw. schneckenförmiges Werkzeug wie ein Wälzfräser oder eine Schleifschnecke oder aber auch ein Stoßrad in Frage.

Die erfindungsgemäße Vorrichtung weist besonders wenig mechanische Teile auf, insbesondere die bisher übliche Mechanik zur Einstellung der relativen Winkellage des Werkstückes zum Bearbeitungstisch entfällt.

Weitere erfindungswesentliche Merkmale ergeben sich aus der nachfolgenden Beschreibung eines schematisiert dargestellten Ausführungsbeispiels der Erfindung, das anhand von Abbildungen näher beschrieben wird. Hierbei zeigt

Figur 1 die perspektivische Ansicht der prinzipiellen Anordnung der erfindungsgemäßen Vorrichtung, und

Fig. 2 eine schematische Darstellung der Sensorsignale und des Werkzeug-Steuersignals.

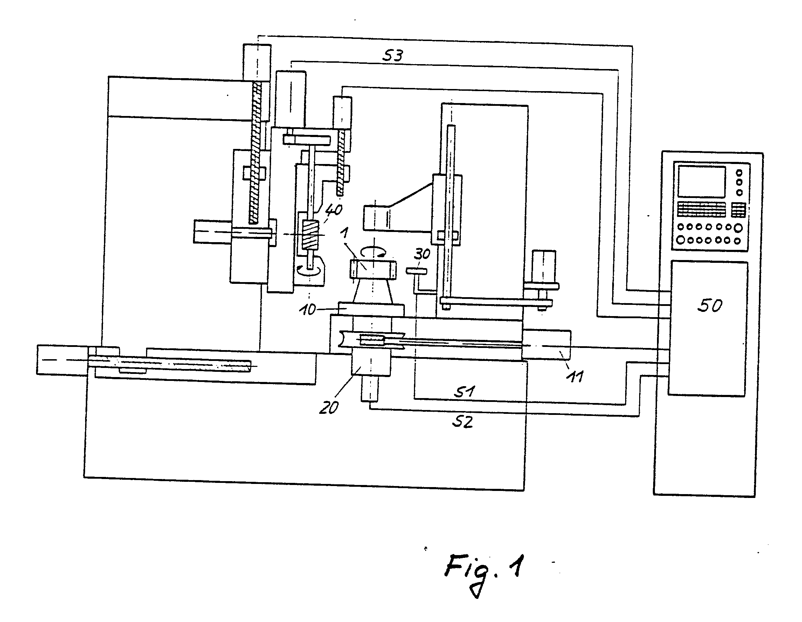

Wie aus Fig. 1 hervorgeht, umfaßt die Vorrichtung einen Bearbeitungstisch 10, der über eine Welle gegebenenfalls unter Zwischenschaltung eines Getriebes mit einem Antriebsmotor 11 verbunden ist. Der Bearbeitungstisch 10 ist mit einem Drehwinkelsensor 20 versehen, der im vorliegenden Beispiel eine Scheibe mit einem Schlitz und eine Gabellichtschranke umfaßt, die derart angeordnet ist, daß bei jeder Umdrehung der Lichtstrahl der Lichtschranke nur einmal auf den dazugehörigen Sensor trifft.

Weiterhin weist der Drehtisch eine hier nicht gezeigte Festspannvorrichtung für ein aufzulegendes Zahnrad 1 auf. Es ist ein Sensor 30 vorgesehen, der ortsfest so montiert ist, daß er in der Nähe des Umfanges des Zahnrades 1 liegt, wenn ein solches auf dem Drehtisch 10 befestigt ist. Der Sensor 30 ist hierbei vorzugsweise als berührungsloser Sensor ausgebildet, der ein Ausgangssignal beim Vorbeistreichen eines Zahnes bzw. einer Lücke des Zahnrades ausgibt. Der Ausgang des Sensors 30 ist ebenso wie der Ausgang des Drehwinkelsensors 20 mit dem Eingang eines Computers 50 verbunden.

Weiterhin ist ein steuerbares Werkzeug 40 vorgesehen, das im vorliegenden Fall eine Schleifscheibe mit Antrieb umfaßt, die in vertikaler Richtung (Fig. 1) über die Zahnflanken geführt werden kann. Bei einer Schrägverzahnung wird hierbei das Werkzeug 40 selbstverständlich mit einer weiteren Komponente bewegt. Das Werkzeug 40 wird über eine Steuerleitung vom Computer 50 gesteuert.

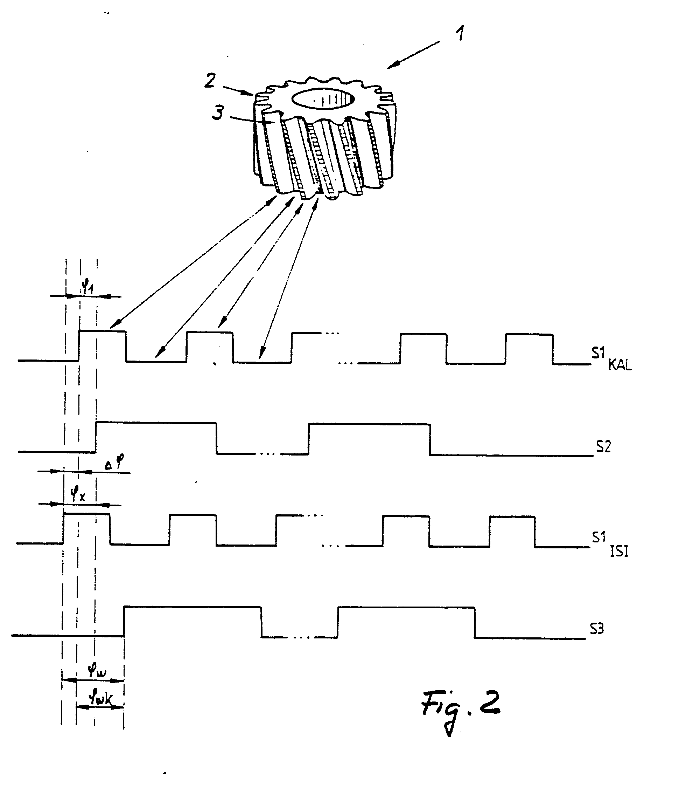

In Fig. 2 ist der (prinzipielle) Signalfluß der Anordnung nach Fig. 1 erläutert. Hierbei bezeichnet $S_1$ das Ausgangssignal des Sensors 30, $S_2$ das Ausgangssignal des Sensors 20 und $S_3$ das Steuersignal für das Werkzeug 40.

Wenn man die Vorrichtung auf Zahnräder einer Serie einstellen will, so spannt man zunächst ein erstes Zahnrad 1 auf den Bearbeitungstisch 10 auf und stellt das Werkzeug 40 so ein, daß die vor dem Werkzeug stehende Zahnflanke in der gewünschten Weise bearbeitet wird. Der Wälzkopplungswinkel $\phi_{Wk}$ wird also in diesem Fall noch von Hand eingestellt. Dann mißt man bei Drehung des Bearbeitungstisches 10 bzw. des Zahnrades 1 den Phasenwinkel $\phi_1$, der zwischen den Signalen $S_1$ und $S_2$ auftritt. Die Messung erfolgt jeweils selbstverständlich im Computer 50. Dieser Wert wird im Computer 50 gespeichert. Sodann kann die automatische Bearbeitung von Zahnrädern beginnen. Der Bearbeitungstisch 10 wird hierbei in Drehung versetzt und während des Drehens werden die Zahnräder 1 aufgelegt und festgespannt. Sobald das jeweilige Zahnrad 1 festgespannt ist, mißt der Computer den nunmehr vorliegenden Phasenwinkel $\phi_x$, der höchstens rein zufällig mit dem im Kalibrierschritt gemessenen Phasenwinkel $\phi_1$ übereinstimmt. Sodann wird im Computer 50 die Differenz des gespeicherten zum nunmehr gemessenen Phasenwinkel gebildet ($\phi_x - \phi_1 = \Delta\phi$). Das Resultat der Berechnung $\Delta\phi$ bestimmt eine zusätzliche Verstellung des Tisches ("Verstimmung") derart, daß der ursprüngliche Wälzkopplungswinkel $\Delta\phi_{Wk}$ wieder hergestellt ist. Die Korrektur erfolgt also durch eine Zusatzverstellung des Tisches.

Es ist somit gleichgültig, in welcher Winkelposition (relativ zum Bearbeitungstisch 10) ein Zahnrad 1 auf dem Tisch 10 aufgespannt wird. Der Kopplungswinkel muß hierbei höchstens um den, einem halben Zahn entsprechenden Winkel, verstellt werden. Natürlich kann der Eintauchpunkt des Werkzeugs auch durch eine rechnerische Simulation für jeden Einzelfall vorherbestimmt werden, da der Drehwinkel zwischen Eintauchpunkt und Sensor festliegt, er beträgt beispielsweise 47,5 Bogengrad.

**Ansprüche:**

1. Verfahren zum Einstellen der Winkellage der Verzahnung mehrerer nacheinander zu bearbeitenden vorverzahnter Zahnräder einer Serie bezüglich der Verzahnung eines verzahnten drehantreibbaren Verzahnungswerkzeugs, an NC-gesteuerten Zahnflankenbearbeitungsmaschinen, die im Wälzverfahren mit elektronischer Wälzkopplung zwischen Werkstück-und Werkzeug-Drehung arbeiten, und bei denen die zu bearbeitenden Zahnräder auf einem für den Drehanteil der Wälzbewegung drehantreibbaren Werkstücktisch aufgespannt werden, wobei das Verzahnungswerkzeug und die Vorverzahnung wenigstens des ersten Zahnrades einer Serie, als Ausgangseinstellung für die Bearbeitung zueinander justiert werden, **gekennzeichnet** durch folgende Verfahrensschritte:

a) Man spannt ein erstes Zahnrad einer Serie in beliebiger Winkellage auf den Werkstücktisch, justiert die Verzahnung des Bearbeitungswerkzeugs bezüglich der Zahnflanken des Zahnrades (Festlegung des Wälzkopplungswinkels ($\phi$ Wk)) und schließt die Wälzkopplung;

b) Man versetzt den Werkstücktisch in Drehung;

c) Man bestimmt in einer Kalibriermessung die Phasenlage ($\phi$ 1) von Signalen (Zahnsignal), die beim Vorbeistreichen der Zähne des Zahnrades an einem in definierter Lage angeordneten Sensor (30) generiert werden, bezüglich der Winkellage des Werkstücktisches;

d) Man bestimmt zum Bearbeiten aller weiteren Zahnräder der Serie nach dem Festspannen eines jeden Zahnrades auf dem Werkstücktisch in beliebiger Winkellage die Phasenlage ($\phi$ x) der Zahnsignale;

e) Man vergleicht die Phasenlage ($\phi_x$) der Zahnsignale mit der im Schritt c) ermittelten Phasenlage ($\phi1$);

f) Man verstellt den Kopplungswinkel ($\phi_W$) zwischen Werkzeug und Werkstücktisch um den sich ergebenden Differenzbetrag ($\Delta\phi = \phi_{x-1}$).

2. Verfahren nach Anspruch 1, dadurch **gekennzeichnet**, daß man beim Auflegen, abnehmen und Bearbeiten der Zahnräder den Werkstücktisch mit im wesentlichen gleichbleibender Drehzahl drehen läßt.

3. NC-gesteuerte Zahnflankenbearbeitungsmaschine zur Durchführung des Verfahrens nach einem der vorhergehenden Ansprüche, mit einem drehbaren Werkstücktisch (10) mit Antriebsmotor (11), mit einem mit dem Werkstücktisch (10) gekoppelten Drehwinkelsensor (20), der ein der Winkelposition des Werkstücktisches (10) entsprechendes Ausgangssignal liefert, mit einem verzahnten drehantreibbaren Verzahnungswerkzeug (5), das mit einem Drehwinkelsensor (S3) gekoppelt ist, der ein der Winkelposition des Verzahnungswerkzeugs entsprechendes Ausgangssignal liefert, sowie mit elektronischer Wälzkopplung zwischen Werkstücktisch und Verzahnungswerkzeug **gekennzeichnet** durch:

-einen Sensor (30), der in der Nähe der Zähne (2) des Zahnrads (1) angeordnet ist, und mindestens zwei unterschiedliche Signale entsprechend einer Zahnlücke (3) oder einer Zahnflanke (2) liefert,

-eine Signalverarbeitungs-und Steuerschaltung (Computer 50), die mit den Sensoren (20, 30) und dem Verzahnungswerkzeug (40) verbunden ist, wobei die Signalverarbeitungs und Steuerschaltung -Komparatormittel aufweist, um die Phasenlage zwischen deb Ausgangssignalen der beiden Sensoren (20, 30) bei drehendem Werkstücktisch (10) zu bestimmen,

-Speichermittel aufweist, um in einem Kalibrierschnitt die ermittelte Phasenlage zu speichern, und

-eine in Hard-oder Software realisierte Rechenschaltung aufweist, um die nach dem Aufspannen eines Zahnrades (1) auf den Werkstücktisch (10) bestimmte Phasenlage zwischen den Ausgangssignalen der Sensoren (20, 30) mit der gespeicherten Phasenlage zu vergleichen, den Differenzwert zu bestimmen und die relativen Arbeitswinkelpositionen des Werkstücktisches oder des Verzahnungswerkzeugs entsprechend dem Differenzbetrag derart zu verändern, daß die Phasendifferenz zwischen Arbeitswinkelposition und Ausgangssignal des ersten Sensors (30) mit derjenigen im Kalibrierschritt übereinstimmt.

0 250 775

Fig. 1

Fig. 2